Europäisches Patentamt

European Patent Office

Office européen des brevets

(11) Numéro de publication : **0 083 548**
**B1**

# FASCICULE DE BREVET EUROPÉEN

(45) Date de publication du fascicule du brevet :
16.06.87

(51) Int. Cl.⁴ : **F 24 J   2/06**

(21) Numéro de dépôt : **82430040.4**

(22) Date de dépôt : **16.12.82**

(54) **Dispositif pour capter et exploiter le rayonnement solaire global.**

(30) Priorité : **23.12.81 FR 8124103**

(43) Date de publication de la demande :
**13.07.83 Bulletin 83/28**

(45) Mention de la délivrance du brevet :
**16.06.87 Bulletin 87/25**

(84) Etats contractants désignés :
**CH DE FR GB IT LI NL**

(56) Documents cités :
FR-A- 2 407 439
FR-A- 2 407 442
FR-A- 2 458 768   .
US-A- 4 030 477
US-A- 4 069 812
US-A- 4 143 643

(73) Titulaire : **Touchais, Maurice**
**1706 Chemin du Pioulier**
**F-06140 Vence (FR)**

(72) Inventeur : **Touchais, Maurice**
**1706 Chemin du Pioulier**
**F-06140 Vence (FR)**
Inventeur : **Djelalian, Madeleine**
**10 Impasse Abovian**
**F-13015 Marseille (FR)**

(74) Mandataire : **Rinuy, Santarelli**
**14, avenue de la Grande Armée**
**F-75017 Paris (FR)**

# 0 083 548

## Description

Pour utiliser l'énergie solaire, il est connu de faire appel à des capteurs solaires fixes constituant des convertisseurs thermiques, également dénommés « insolateurs à fonction thermique » et dits ci-après « insolateurs ».

Ces derniers comportent en général :

— Une couverture transparente avant par où pénètrent les rayons solaires ou la lumière incidente ;

— Des surfaces réceptrices absorbantes qui convertissent l'énergie du rayonnement solaire en chaleur, laquelle est alors transférée à des fluides caloporteurs : gaz ou liquides divers en particulier, air ou eau ;

— Une isolation thermique arrière.

La couverture transparente qui joue surtout un rôle de protection de l'intérieur de l'appareil contre les intempéries est souvent conçue et réalisée pour réduire les déperditions calorifiques dues à l'émission, vers l'extérieur, du flux thermique engendré dans l'appareil et aussi pour s'opposer au passage des courants convectifs soit venant de l'intérieur de l'appareil, soit de l'extérieur.

Par ailleurs, l'intervalle dénommé aussi « espace intermédiaire » entre cette couverture transparente et les surfaces réceptrices absorbantes est généralement de faible épaisseur, de manière à réduire les courants convectifs intérieurs qui peuvent être responsables d'importantes déperditions thermiques. Aussi plaçait-on jusqu'ici, dans cet espace intermédiaire, divers dispositifs destinés justement à lutter contre ces courants convectifs et aussi contre l'émission du rayonnement infra-rouge provenant des surfaces chauffées, sans toutefois donner entièrement satisfaction quant à l'utilisation totale de l'énergie incidente.

On connaît, par ailleurs, dans la technique antérieure des moyens « concentrateurs » du rayonnement solaire faisant appel, de façon générale, à des moyens optiques conçus pour capter dans une enceinte montée orientable les rayons lumineux directs quasiment parallèles provenant du soleil et les faire converger en un point particulier dit « point focal », ce dernier se situant dans une ouverture de diamètre aussi faible que possible pour déboucher dans une enceinte fixe thermiquement isolée dite « foyer » thermique contenant des surfaces fixes d'échanges thermiques avec canalisations de circulation d'un fluide caloporteur ou autres milieux fluides.

On citera, par exemple, FR-A-2 458 768 qui est fondé sur ce principe. On peut citer de même FR-A-20 407 442 qui décrit un insolateur fixe à concentrateur fixe.

On constate toutefois que les moyens qui sont décrits dans ces brevets ne permettent pas de récupérer l'énergie globale du rayonnement d'où déperdition de cette énergie ou que les moyens choisis pour le transfert d'énergie n'évitent pas les pertes inhérentes à ces moyens eux-mêmes. Or l'invention pallie ces inconvénients en fournissant les moyens pour la récupération globale du rayonnement et, d'autre part, les moyens pour que le transfert d'énergie se fasse avec le minimum de perte.

Le but que se propose d'atteindre la présente invention est donc de pouvoir, d'une part, utiliser au maximum le rayonnement solaire global et, par conséquent, l'énergie incidente et, d'autre part, réduire au minimum les déperditions thermiques.

L'invention fournit donc les moyens et dispositifs permettant d'atteindre ces buts.

Elle fournit en particulier un insolateur spécialement conçu à cet effet, de même qu'une installation comportant plusieurs insolateurs conformes à l'invention en vue de disposer d'une source thermique à tous usages.

L'invention couvre donc un dispositif pour capter et exploiter au maximum le rayonnement solaire, dispositif du type comportant un ou plusieurs moyens optiques, conçus pour capter dans une enceinte, montée orientable, les rayons lumineux directs quasiment parallèles provenant du soleil et les faire converger en un point focal, ce dernier se situant dans l'ouverture de diamètre aussi faible que possible d'une enceinte fixe thermiquement isolée contenant des surfaces fixes d'échanges thermiques avec des canalisations fixes de circulation d'un fluide caloporteur, caractérisé par le fait qu'il renferme dans l'espace intermédiaire entre une couverture transparente et des parois de l'insolateur :

a) les moyens optiques thermiquement isolés avec les enceintes thermiquement isolées et les surfaces fixes d'échange thermique contenues dans l'enceinte fixe qui sont en communication avec des moyens d'admission d'air ou d'un autre gaz et de circulation de ce dernier autour desdites canalisations fixes de circulation dudit fluide caloporteur ;

b) des surfaces réceptrices absorbantes destinées à recevoir le rayonnement solaire non précédemment capté par lesdits moyens optiques et des moyens de circulation d'air ou d'un autre gaz autour des surfaces réceptrices.

Suivant d'autres caractéristiques :

— l'axe de rotation servant au mouvement d'orientation des moyens optiques se situe sensiblement audit point focal.

De façon avantageuse :

— Le moyen optique faisant converger les rayons lumineux directs quasiment parallèles provenant du soleil vers le point focal est choisi parmi les dispositifs optiques du type catoptrique ou dioptrique, permettant au faisceau de rayons réfléchis de se propager dans le sens général de la lumière incidente ;

2

— Suivant un mode de réalisation avantageux, ledit moyen optique comporte une lentille de Fresnel et/ou des surfaces réfléchissantes dont le facteur de réflexion est surtout élevé dans la partie visible et faible dans le spectre infrarouge en association avec une couverture transparente placée à l'entrée du rayonnement solaire. Dans le cas d'une lentille de Fresnel, cette couverture est constituée par la lentille elle-même ;

— De façon plus particulière, ledit moyen optique est constitué d'un multi-paraboloïde de révolution grand angulaire ou par une surface réfléchissante formée de plusieurs paraboloïdes de révolution grand angulaire placés à l'intérieur les uns des autres, ces paraboloïdes pouvant être échancrés suivant un angle pouvant atteindre 180° ;

— Suivant une variante, ledit moyen optique peut être constitué d'éléments cylindro-paraboliques à multisurfaces grand angulaire ;

— Des moyens optiques supplémentaires dits surconcentrateurs sont prévus au voisinage de l'ouverture située audit point focal de manière à embrasser la totalité des rayons convergents éventuellement aberrants pour les diriger sûrement vers l'ouverture focale afin qu'ils puissent pénétrer dans ledit foyer thermique ;

— Des surfaces réceptrices absorbantes alvéolaires supplémentaires sont prévues soit à la sortie du moyen optique, dans l'ouverture focale, soit dans ledit foyer thermique, soit à l'un et à l'autre endroit pour réduire les pertes par réémission au travers de l'ouverture focale ;

— Les surfaces réceptrices absorbantes hors du moyen optique de focalisation sont avantageusement constituées par des alvéoles tubulaires très absorbants dans le visible et l'infrarouge pour former des canaux parcourus dans le sens des rayons lumineux par une circulation d'air animée d'un mouvement turbulent.

Suivant un mode de réalisation avantageux, un moyen occulteur de sécurité est prévu sur le trajet du rayonnement soit en amont, soit à la sortie du moyen optique.

Suivant enfin d'autres caractéristiques :

— la couverture transparente de l'ensemble insolateur peut avoir un mouvement de translation ;

— cette couverture transparente peut être plane ou de forme quelconque et des héliostats extérieurs sont prévus lorsque les moyens optiques ne reçoivent pas simultanément le rayonnement direct ;

— la partie arrière de l'insolateur est, par endroits, transparente, afin d'éclairer s'il en est besoin le sol ou les locaux placés au-dessous ;

— dans l'espace intermédiaire entre la couverture transparente et les surfaces absorbantes, il est prévu plusieurs moyens optiques disposés en une ou plusieurs lignes dans l'une des deux directions de l'espace, à savoir est-ouest ou nord-sud.

D'autres caractéristiques et les avantages de l'invention ressortiront plus clairement de la description qui va suivre faite en regard des dessins annexés sur lesquels :

— la figure 1 est une vue schématique en élévation illustrant un moyen optique (dioptrique) pour la mise en œuvre de l'invention ;

— la figure 2 est une variante de réalisation de ce moyen optique (catoptrique) ;

— la figure 3 est une vue schématique de profil d'un insolateur mettant en œuvre l'invention ;

— la figure 4 est une vue schématique de face d'un tel insolateur.

— Les figures 5 à 8 sont des représentations illustratives de quatre génératrices paraboliques possibles entrant dans la réalisation du moyen optique permettant la mise en œuvre du procédé de l'invention ;

— Les figures 9 à 11 sont des représentations illustratives des génératrices des surfaces réfléchissantes formant le « surconcentrateur » associé au moyen optique selon l'invention ;

— La figure 12 est une vue en coupe schématique d'un tel surconcentrateur adapté à un foyer thermique fixe ;

— La figure 13 est une vue en coupe schématique d'une réalisation d'un foyer thermique mettant en œuvre l'invention dans le cas d'une monture altazimutale ;

— La figure 14 est une vue en plan correspondant à la figure 13 ;

— Les figures 15 à 17 sont des schémas illustratifs des surfaces absorbantes entrant dans la réalisation d'un insolateur mettant en œuvre l'invention hors concentrateur ;

— Les figures 18 et 19 sont des schémas illustrant l'application de l'invention à la réalisation d'installations thermiques et

— la figure 20 est l'illustration géométrique du cas d'une monture équatoriale.

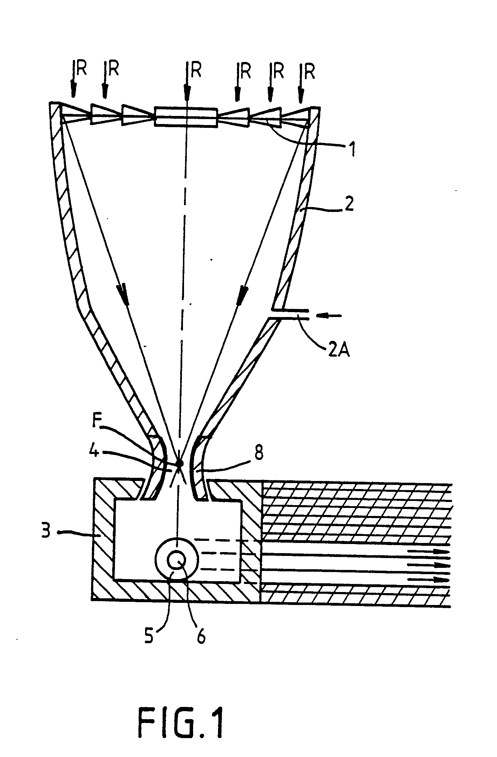

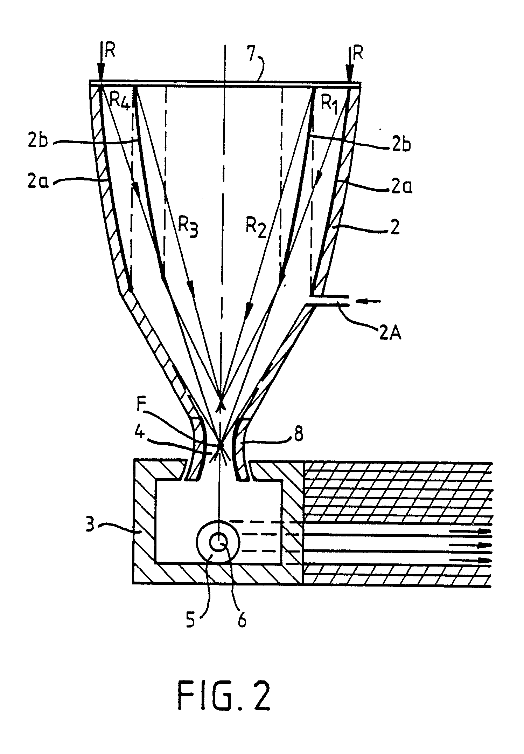

En se référant à ces dessins, on a représenté, sur les figures 1 et 2, deux modes de réalisation d'un moyen optique permettant de mettre en œuvre l'invention.

Dans le cas de la figure 1, ce dispositif est constitué par une lentille de Fresnel 1 constituant la face d'entrée d'une enceinte thermiquement isolée dont la paroi porte la référence 2 (enceinte dite ci-après « pré-foyer » contenant le « concentrateur ») réalisée en un matériau isolant, réfractaire absorbant les rayons lumineux. Cette enceinte aura avantageusement la forme d'un volume de révolution (tel qu'un cône ou autre volume de révolution).

Une conduite 2A est prévue pour l'admission d'air ou de tout autre gaz approprié.

Les rayons parallèles incidents R provenant du soleil après avoir traversé la lentille 1 convergent en un point « F » dit « point focal ». La lumière ainsi concentrée pénètre alors dans une enceinte thermiquement isolée 3 dite « foyer thermique » par une ouverture 4 de section aussi faible que possible, ménagée justement au droit dudit point focal « F ». Ladite enceinte est traversée par des canalisations fixes de circulation de fluides caloporteurs (air-eau) tels que 5-6. Le moyen optique et ses accessoires décrits ci-dessus devant être susceptibles de suivre le soleil dans son mouvement apparent diurne, il est conçu de façon à être nécessairement orientable. Pour ce faire, on place conformément à l'invention, le point focal « F » en principe au point de concours des axes de rotation du mouvement d'orientation dudit « pré-foyer » avec son concentrateur. On notera que cette orientation doit se faire avec précision (au moyen de dispositifs n'entrant pas dans le cadre de la présente invention) pour ne pas être obligé d'augmenter exagérément les dimensions de l'ouverture 4 de pénétration du flux lumineux dans le foyer thermique 3, ce qui aurait pour conséquence d'accroître les pertes d'énergie par cette ouverture (dite encore fenêtre seconde), la fenêtre première étant l'ouverture d'entrée du rayonnement solaire dans le concentrateur lui-même, ouverture qui doit être fermée. Cette fermeture est assurée par la lentille de Fresnel 1. Les dimensions de cette fenêtre première sont à priori arbitraires, mais elles conditionnent les dimensions de l'ensemble du capteur et en particulier de la charpente contenant et soutenant tous les éléments de captation, de conversion et d'échanges thermiques ainsi que des accessoires.

Avec le dispositif qui vient d'être décrit, on comprendra aisément que l'énergie du rayonnement se convertit en chaleur dans le « foyer thermique » 3 et qu'elle peut alors être transférée au fluide caloporteur que l'on désire. Conformément au procédé de l'invention, on met l'enceinte dudit foyer thermique en dépression de manière à y faire circuler l'air ou autre gaz admis en 2A dans le pré-foyer 2 et/ou du reste de l'insolateur (comme on le verra ci-après) et l'admettre dans des canalisations telles que 5.

Pour assurer la sécurité, l'invention prévoit entre autres un dispositif occulteur (non représenté) placé sur le trajet du rayonnement, soit en amont du concentrateur, soit à la sortie de ce dernier. Le système de contrôle de ce dispositif de type connu peut utiliser soit des ondes optiques ou thermiques soit la détermination directe de l'erreur d'orientation.

En se référant à la figure 2, le pré-foyer 2, alors fermé par une couverture transparente 7, comporte un multiparaboloïde de révolution grand angulaire ou surface réfléchissante formée de plusieurs paraboloïdes (tels que 2a-2b) intérieurs les uns aux autres explicités plus en détail ci-après. La parabole réfléchissante doit être obligatoirement grand angulaire, c'est-à-dire utilisant des angles polaires $\theta$ nettement supérieurs à 90°, afin que le faisceau de rayons réfléchis (faisceau convergent $R_1$, $R_2$, $R_3$, $R_4$) continue à se propager dans le sens général de la lumière incidente (R), le foyer thermique étant vers le sol et non en élévation comme cela serait si l'angle polaire du réflecteur paraboloïde était inférieur à 90°. La position choisie vers le sol pour le foyer thermique permet de rendre fixe toutes les canalisations où circule le fluide à chauffer. Ainsi l'invention permet de ce fait une réalisation et une exploitation plus sûres de ces canalisations, dans lesquelles peuvent régner des températures et des pressions élevées ; par suite, leur isolation thermique est plus facile à réaliser aussi et, partant, elle peut être de meilleure qualité, ce qui est un point extrêmement important pour le but recherché par la présente invention : en effet, la température du ou des fluides caloporteurs résulte nécessairement d'un bilan thermique dont le poste des pertes doit être réduit au minimum, cette diminution de perte étant justement obtenue grâce à la présente invention.

Le réflecteur multiparaboloïde grand angulaire selon la présente invention est fondé sur le principe suivant :

Soit une génératrice d'un miroir paraboloïde grand angulaire ; elle est limitée par deux diamètres : le diamètre haut et le diamètre bas. Les rayons lumineux qui se dirigent pour passer au travers du diamètre bas doivent être arrêtés par un autre paraboloïde réfléchissant qui ait le même point focal. Cet autre paraboloïde repose d'ailleurs le même problème et ainsi de suite, ce qui amène à considérer plusieurs paraboloïdes intérieurs les uns aux autres.

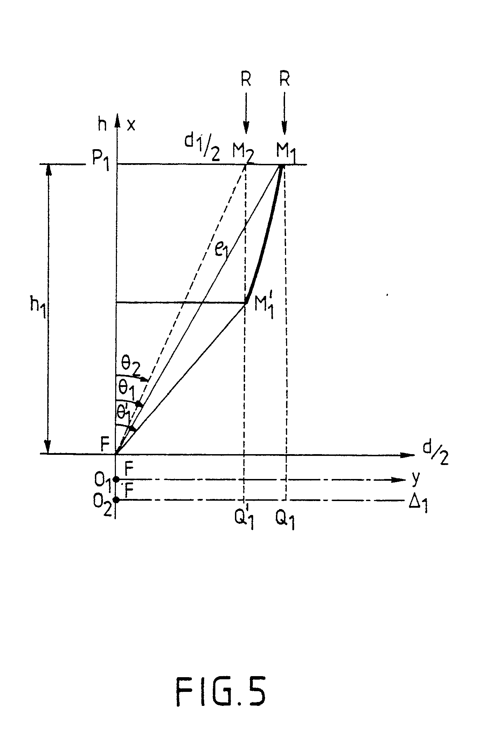

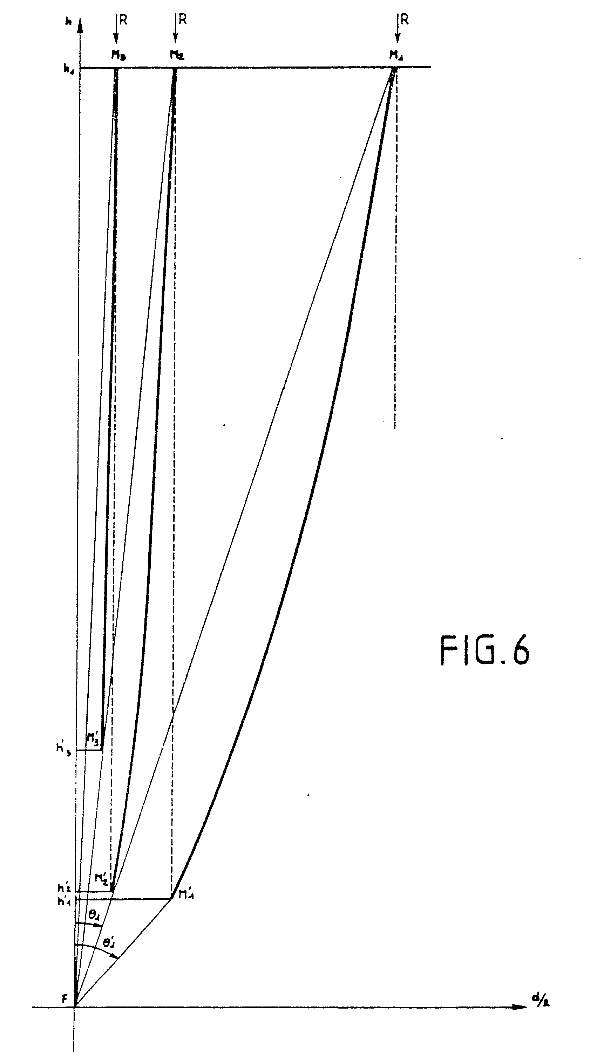

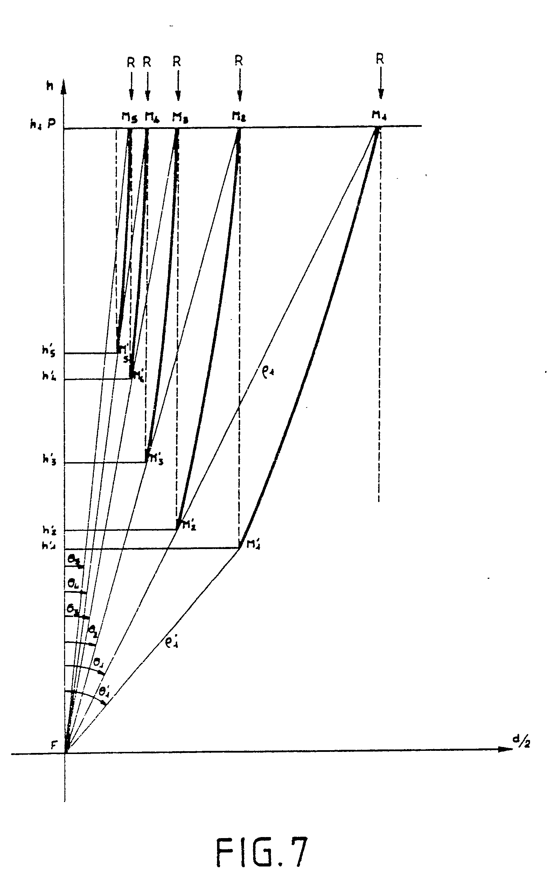

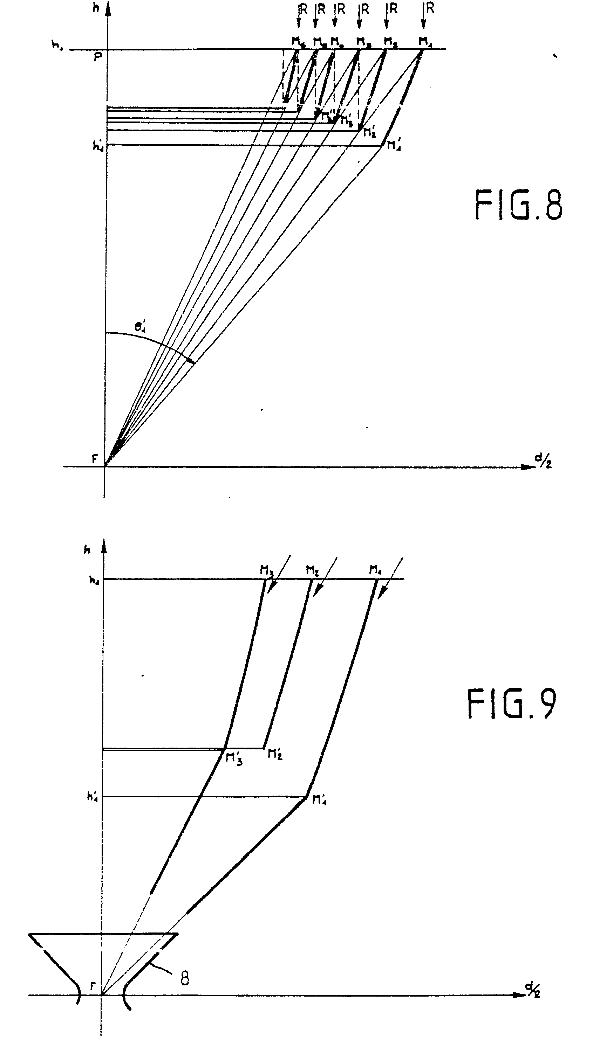

Les rayons lumineux voisins de l'axe viennent directement dans l'ouverture focale ou tout au moins dans le dispositif optique placé près de l'ouverture focale. Les figures 5 à 8 donnent les représentations de quelques génératrices paraboliques figurant en traits forts, dans un plan diamétral, du concentrateur multiparaboloïde grand angulaire, dans trois hypothèses relatives au même diamètre de la fenêtre d'entrée, supposée plane, du rayonnement incident, et au même angle d'incidence maximal des rayons réfléchis, pour trois hauteurs : une hauteur arbitraire (cf. figure 6), la moitié (cf. figure 7) et le tiers (cf. figure 8). Le point focal F est l'origine adoptée des axes : axe des hauteurs F-h, axe des demi-diamètres F-d/2. Le point $M_1$ du paraboloïde le plus extérieur est donc une donnée ainsi que les points $M_2$, $M_3$, $M_4$, $M_5$, $M_6$, etc, qui correspondent aux autres paraboloïdes intérieurs les uns aux autres.

$$\text{Comme exemple } PM_1 = d_1/2$$

est le demi-diamètre du paraboloïde le plus extérieur ; $FP_1 = h_1$ est la hauteur de ce paraboloïde, dont la hauteur relative est donc :

$$h_1/d_1$$

Les points $M'_1$ à $M'_6$ selon les cas définissent les dimensions des diamètres bas.

4

L'angle maximal d'incidence $\theta'_1$ pour le paraboloïde le plus extérieur a été ici arbitrairement choisi égal à 40°. Les rayons réfléchis sont donc compris entre les angles $\theta'_1$ et $\theta_1$, ce dernier étant donné par la relation :

$$\text{tg } \theta_1 = \frac{\dfrac{d_1}{2}}{h_1} \tag{1}$$

Le rayon vecteur $FM_1 = \rho_1$ est donné par la relation :

$$\rho_1 = \frac{h_1}{\cos \theta_1} \tag{2}$$

La figure 5 qui donne ces divers éléments indique en outre les axes $O_1 xy$ ($O_2 x \Delta_1$) de chaque parabole et sa directrice. On a (par exemple pour $M_1$) :

$$FM_1 = \rho_1 \quad \text{et} \quad M_1 Q_1 = h_1 + 2f_1 \tag{3}$$

La distance focale de la parabole passant par $M_1$ est donnée par la relation :

$$f_1 = \frac{\rho_1 - h_1}{2} = h_1 \frac{1 - \cos \theta_1}{2 \cos \theta_1} \tag{4}$$

On peut ainsi établir les mêmes relations pour $M_2$ donnant la valeur de $M_2 Q'_1$ ainsi que la valeur de $\rho'_1$ correspondant à l'angle $\theta'_1$ avec la valeur de $h'_1$ et ainsi pour tous les autres paramètres de h ($h'_2$ à $h'_5$), de $\theta$ ($\theta_2$ à $\theta_5$) et de $\rho$.

La connaissance de ces distances focales permet de tracer les paraboles point par point.

Lorsque le nombre de paraboloïdes va croissant, le diamètre de la fenêtre première va diminuant et la surface de captation décroît selon le carré du diamètre.

Dans la réalisation pratique, il faut tenir compte en outre des épaisseurs du matériau constituant la surface réfléchissante et de la divergence des rayons lumineux due au diamètre apparent du soleil et aux diverses erreurs de construction.

Il y a nécessairement des pertes optiques dont une bonne part se convertit en chaleur et est récupérée dans le pré-foyer dont le rôle fondamental est :

1) de ramener dans le foyer thermique l'énergie perdue par émission infra-rouge ;

2) de supprimer les pertes convectives.

On peut remarquer en traçant quelques génératrices paraboliques que le nombre de réflecteurs est d'autant plus grand que la hauteur relative est plus faible. Par ailleurs, on remarque aussi que le rayon vecteur, qui détermine finalement le diamètre de l'ouverture focale, est d'autant plus grand que cette hauteur relative est plus grande. Un compromis expérimental permet de déterminer les conditions optimales qui seront commentées ci-après.

Une autre observation peut également être faite : au fur et à mesure que les génératrices paraboliques se rapprochent de l'axe, elles tendent à devenir rectilignes et cette tendance est d'autant plus marquée que la hauteur relative est plus faible et aussi que l'angle d'incidence maximal $\theta'_1$ est plus petit.

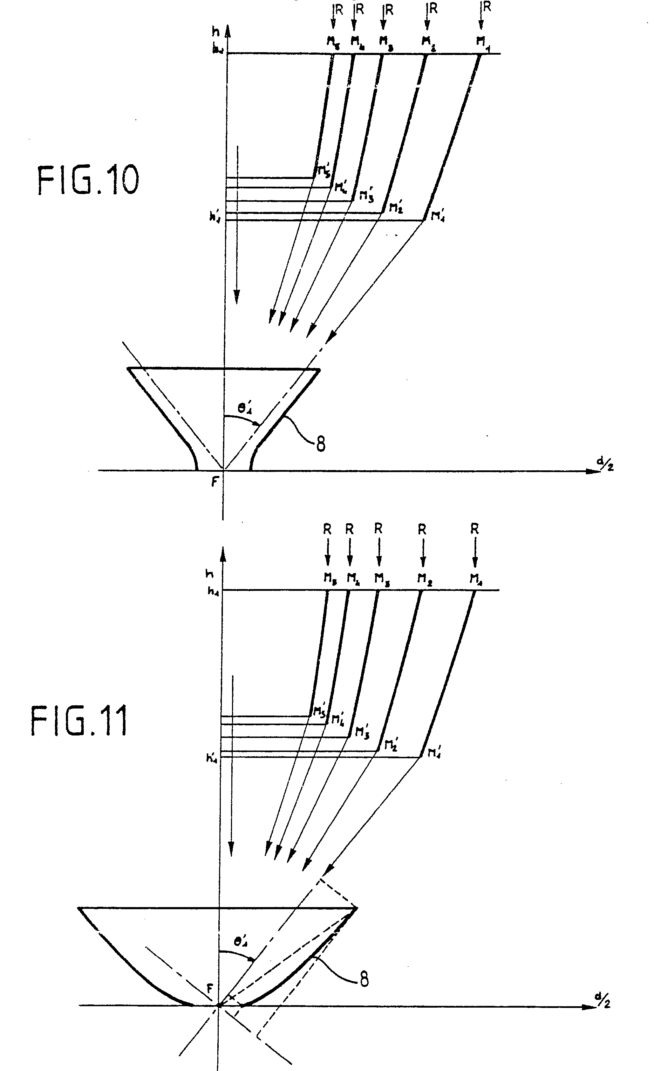

Une expérience à la portée de l'homme de l'art permet de choisir entre l'angle de 40° adopté dans les figures qui viennent d'être examinées ou celui de 30° qui a été choisi pour les figures 11 à 13. Les surfaces réfléchissantes intérieures se rapprochent alors de la forme conique qui est incontestablement de plus simple construction. Lorsque ces surfaces à génératrices rectilignes sont nombreuses, le concentrateur peut être dit multiconique.

Le maintien de ces surfaces dans leur position relative nécessite de matérialiser quelques plans diamétraux sur lesquels elles viennent se fixer, plans eux-mêmes liés rigidement à la monture support.

Au cas où les températures requises ne nécessitent pas de clore le pré-foyer, les surfaces paraboloïdes de révolution peuvent être échancrées, c'est-à-dire présenter une section circulaire inférieure à 360°. Ceci pour leur permettre, s'il est besoin, de ne pas heurter dans le mouvement d'orientation certains obstacles. Les rayons lumineux qui passent par l'échancrure peuvent être repris au voisinage du point focal par des dispositifs optiques de moindre hauteur afin de leur permettre d'éviter ces mêmes obstacles. Lorsque l'échancrure est de 180°, la surface est dite hémi-paraboloïde.

Pour ne pas agrandir exagérément cette ouverture focale, dont la petitesse constitue l'une des caractéristiques fondamentales de l'invention, les rayons convergents sont reçus dans un réflecteur en principe conique, mais qui peut avoir également une génératrice parabolique et qui ramène vers l'ouverture les rayons pas trop aberrants. Ce réflecteur est appelé surconcentrateur. Il a été représenté schématiquement sur les figures 1 et 2 et porte la référence 8.

Les figures 9 à 11 donnent les représentations des génératrices coniques ou paraboloconiques des surfaces réfléchissantes formant ce surconcentrateur. On peut remarquer que les paraboloïdes réflecteurs peuvent être prolongés par des surfaces réfléchissantes coniques (cf. figure 11) qui ne gênent pas le flux réfléchi et qui viennent compléter le rôle du surconcentrateur.

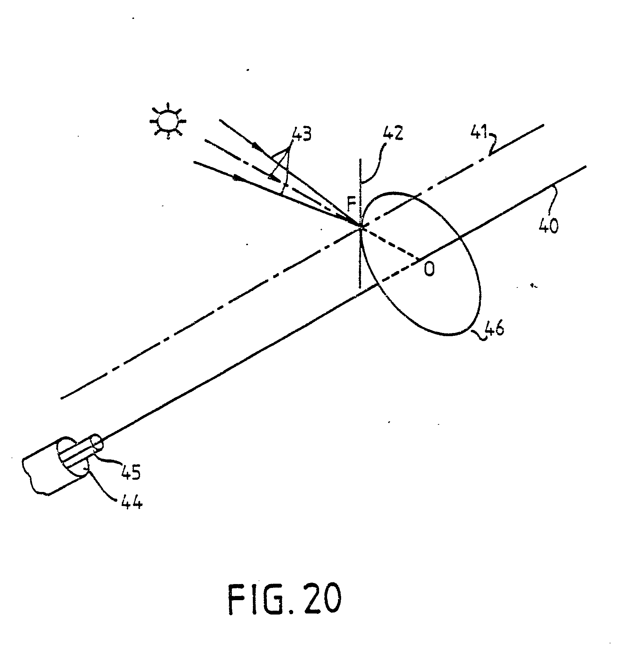

Tandis que le surconcentrateur est exclusivement catoptrique, le concentrateur peut être, lui catoptrique ou dioptrique et aussi une combinaison de ces deux systèmes. Il peut y avoir avantage en effet de remplacer les surfaces réfléchissantes les plus intérieures par une lentille de Fresnel, même si cette lentille présente des pertes un peu plus élevées, car elle n'intéresse qu'une assez faible part du rayonnement incident. Le concentrateur est alors dit catadioptrique. La monture doit être telle que les axes de rotation ne soient point matérialisés dans la région où peut circuler le rayonnement. La monture altazimutale et la monture équatoriale peuvent répondre à ce critère. En fait, la monture altazimutale est conçue pour être posée sur le sol horizontal ; elle comporte alors un axe vertical (qui est l'axe des azimuts) lequel entraîne un axe horizontal (qui est l'axe des hauteurs). Le point focal doit être le point de concours des axes. C'est en effet dans cette position du point focal que le faisceau divergent, à la sortie de l'ouverture focale, balaye dans son mouvement, lors de la poursuite du soleil, l'espace minimum. Ce qui permet de concevoir un foyer thermique moins volumineux donc possédant un minimum de surfaces de déperditions, toujours pour atteindre le but fixé par l'invention. En ce qui concerne la monture équatoriale (voir figure 20) qui comporte un axe parallèle à l'axe du monde (axe horaire) et un axe perpendiculaire (axe de 'déclinaison), la même observation est valable pour le point focal. Cependant, dans ce cas, il est possible de ne pas faire concourir les axes, le point focal étant placé sur le second axe de déclinaison. La partie fixe du foyer thermique se réduit alors, à peu près, aux canalisations de fluides caloporteurs.

En se référant à cette figure 20, on a représenté par 40 l'axe horaire virtuel, par 41 l'axe horaire réel, par 42 l'axe de déclinaison réel, par 43 le faisceau du rayonnement convergent, par 44 la section de la canalisation cylindrique d'air (ou de gaz), par 45 le tube de circulation du fluide caloporteur et par 46 la section maximale du foyer thermique. L'axe horaire peut être matérialisé par exemple par un cylindre tournant de section 46 dans des paliers convenablement placés. Ce cylindre, intérieurement thermiquement isolé comporte sur sa surface extérieure, en chaque point focal les axes de déclinaison qui supportent les concentrateurs et autour desquels tournent ces derniers. Ce cylindre constitue l'élément de jonction dont il a été question précédemment ; l'élément fixe n'est alors formé que des extrémités devant assurer l'étanchéité du foyer thermique.

Mais il faut observer que l'insolateur, qui est le contenant de tous les éléments de réception, d'absorption, de conversion, etc, doit avoir, en principe, une couverture transparente, inclinée de la latitude du lieu, face au Sud. C'est l'inclinaison qui correspond au minimum de pertes par réflexion. Cette inclinaison appelée « calage de l'insolateur » peut d'ailleurs s'écarter quelque peu de la latitude, ce qui n'entraîne pas de grosses variations de pertes optiques, surtout s'il est fait usage, pour la couverture transparente, d'un traitement anti-reflet qui a de plus l'avantage d'éviter l'éblouissement extérieur que peuvent provoquer certaines positions du soleil. La répartition des concentrateurs dans l'insolateur peut se faire de deux façons :

1. En plaçant les montures altazimutales toutes de la même manière par rapport à la couverture transparente et en les échelonnant en escaliers le long de la méridienne ;

2. En inclinant les montures altazimutales de l'angle de calage choisi et en les plaçant toujours de la même manière par rapport à la couverture transparente.

L'axe vertical devient alors l'axe perpendiculaire par rapport au plan incliné. La rotation des axes ne reproduit plus l'azimut et la hauteur du lieu d'installation, mais l'azimut et la hauteur du soleil à l'endroit du globe terrestre où le plan incliné choisi devient le plan horizontal. La commande du mouvement est différente, mais l'on rentre ici dans le cadre des problèmes classiques de régulation. Quant à la monture équatoriale, la répartition se fait en plaçant toutes les montures parallèlement, de la même manière par rapport à la couverture transparente.

Les dispositifs cinématiques à prévoir pour l'entraînement des axes sont des dispositifs connus de l'homme de l'art.

Pour recueillir, sur une surface donnée, le maximum de rayonnement direct, les concentrateurs doivent être placés de manière à être aussi proches les uns des autres que possible, assez éloignés cependant pour qu'ils ne rencontrent par d'obstacles au cours de leur mouvement d'orientation. D'autre part, les positions sont astreintes à celles des canalisations dont le tracé dépend de considérations thermiques diverses. Deux tracés peuvent être prévus, à savoir : un alignement selon la méridienne, un alignement selon l'axe Est-Ouest. Dans certains cas, en particulier pour les régions équatoriales, la couverture transparente de l'insolateur peut être formée d'un ensemble de dômes transparents, diminuant ainsi le volume de l'espace intermédiaire.

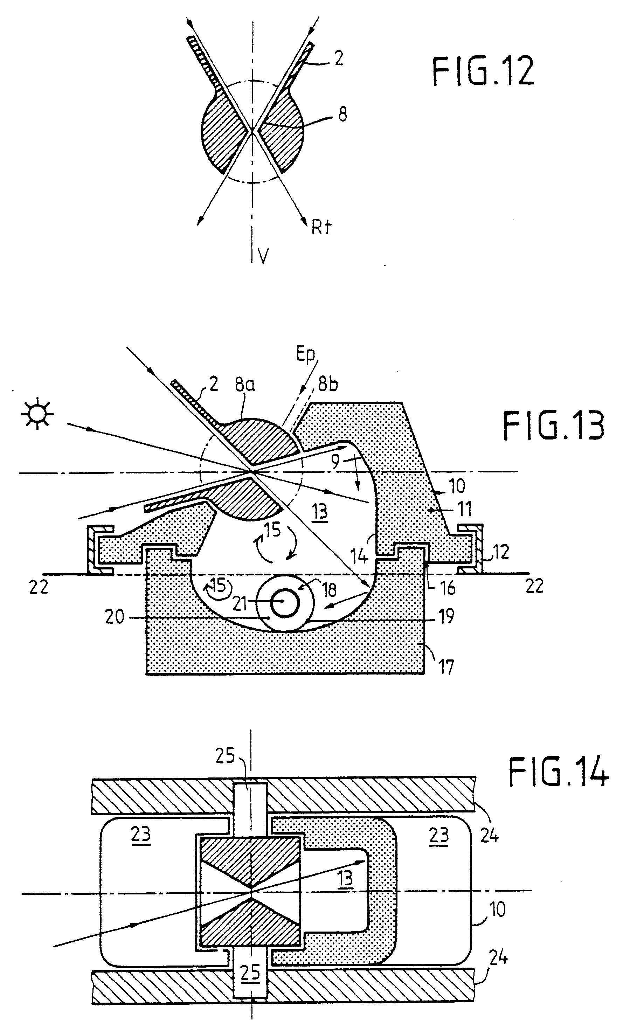

Le foyer thermique considéré comme l'enceinte comportant la canalisation du fluide caloporteur est nécessairement fixe, c'est une caractéristique de l'invention, les performances escomptées reposant essentiellement sur cette fixité. Cependant, un élément mobile doit assurer la jonction tout en réservant une bonne étanchéité, entre le pré-foyer mobile qui tourne autour de l'axe des hauteurs (ou de l'axe qui en tient lieu) et le foyer fixe. Cette pièce de jonction tourne nécessairement avec l'axe des azimuts (ou de l'axe qui, également, en tient lieu) (cf. figures 12 à 14 où :

2 : désigne la paroi du pré-foyer,

6

8 : désigne le surconcentrateur côté entrée du rayonnement du pré-foyer,

$R_t$ : représente la sortie du rayonnement à l'intérieur du foyer thermique,

V : désigne l'espace réservé à l'emplacement du foyer thermique, et de l'élément de jonction,

8a : désigne le cylindre d'entrée tournant autour de l'axe horizontal,

Ep : désigne la position extrême verticale du pré-foyer,

8b : désigne l'étanchéité assurée par des moyens divers connus,

9 : désigne la paroi réfractaire (blanche) de l'élément de jonction du foyer thermique,

10 : désigne une pièce de jonction formant partie supérieure du foyer thermique,

11 : désigne l'isolation thermique,

12 : désigne un guide du mouvement autour de l'axe vertical,

13 : désigne la chambre elle-même du foyer thermique,

14 : désigne les parois réfractaires,

15 : désigne l'air en circulation,

16 : désigne l'étanchéité assurée par des moyens divers connus,

17 : désigne la partie fixe du foyer thermique,

18 : désigne la canalisation de circulation d'air,

19 : désigne une isolation qui n'existe qu'à l'extérieur de la chambre du foyer thermique,

20 : désigne la circulation de l'air dans la canalisation 18,

21 : désigne le tube du fluide caloporteur nécessairement fixe,

22 : désigne la face supérieure du support ou plan d'assise,

23 : désigne des paliers portés par la pièce de jonction 10 et

24 : désigne des bras-supports du concentrateur fixé sur le tourillon 25).

La réalisation de cette condition ne présente pas de difficultés particulières. L'étanchéité peut toujours être assurée, s'il est nécessaire, par le moyen d'une paroi souple, au besoin plissée.

La canalisation où circule l'air qui s'est échauffé dans le foyer thermique et où passent éventuellement le ou les tubes de circulation du fluide caporteur, peut être disposée de deux façons :

— soit parallèlement à la ligne méridienne, ce qui correspond à la circulation la plus logique, car elle permet soit le dégazage du fluide chauffé, soit éventuellement le dégagement de la vapeur produite ;

— soit parallèlement à la ligne Est-Ouest. Pour faciliter s'il y a lieu dans ce cas le dégagement de la vapeur, une légère inclinaison soit Est-Ouest, soit inverse, peut être envisagée, l'énergie fournie par les positions très basses du soleil sur l'horizon n'étant généralement pas importantes. Cette inclinaison a en outre l'avantage (surtout dans le cas des insolateurs placés dans la région équatoriale) de faciliter l'écoulement des eaux pluviales. L'intérêt de cette disposition est dans la possibilité de placer des canalisations relativement longues recueillant par conséquent davantage d'énergie. Si l'on allongeait, en effet, pour obtenir le même résultat énergétique, la ligne méridienne, la hauteur de la charpente côté nord deviendrait prohibitive.

L'air jouant un rôle extrêmement important dans le système, il y a lieu de prévoir, outre les ventilateurs de circulation, des filtres pour épurer cet air.

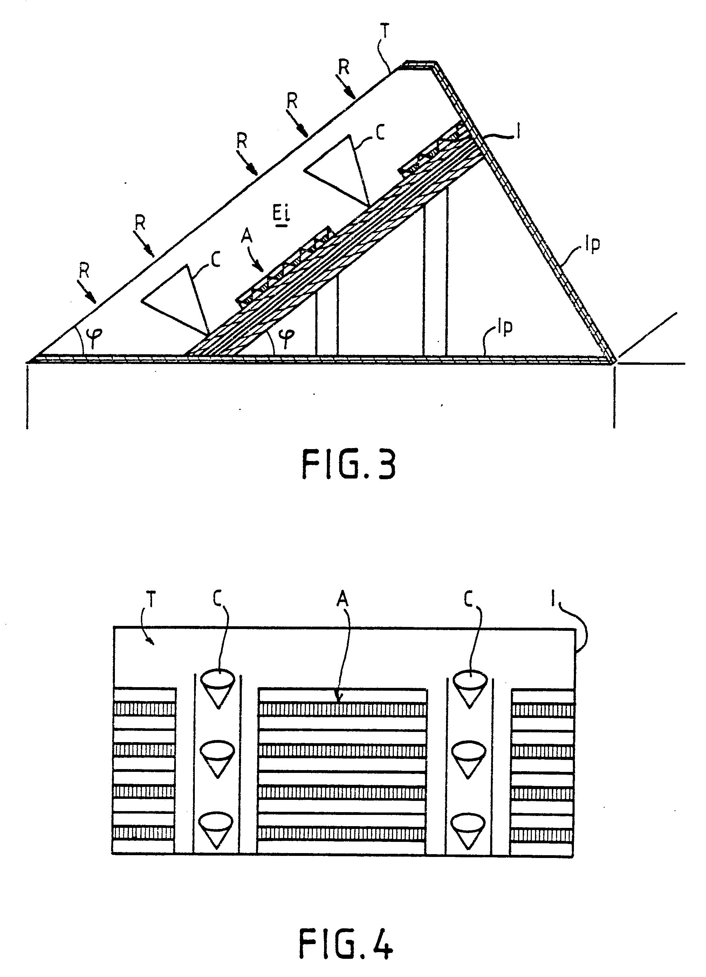

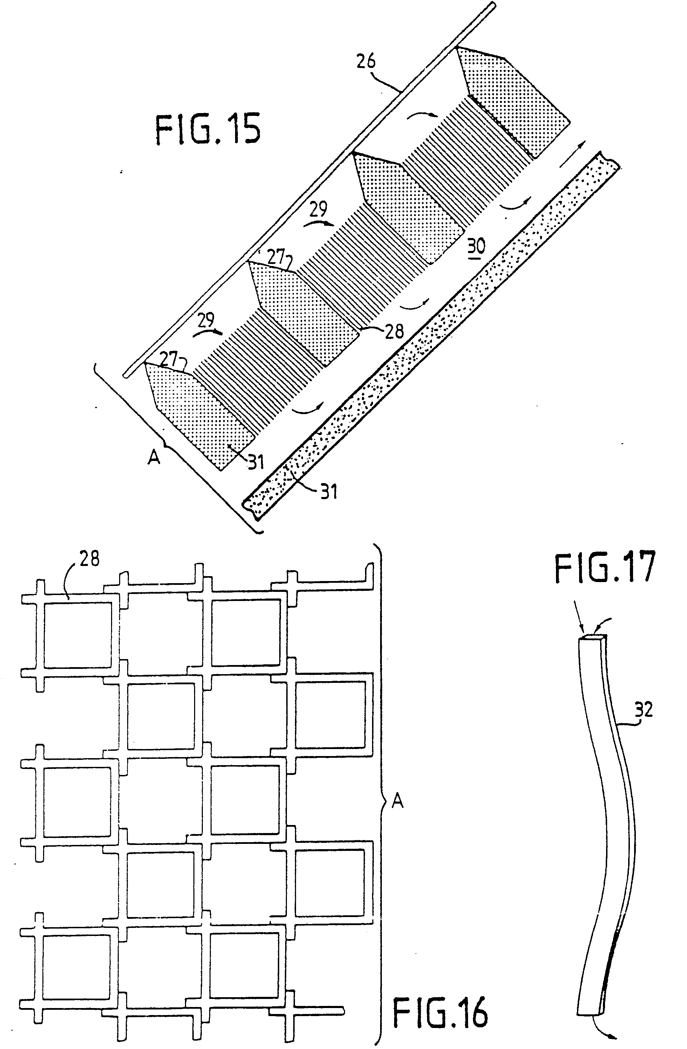

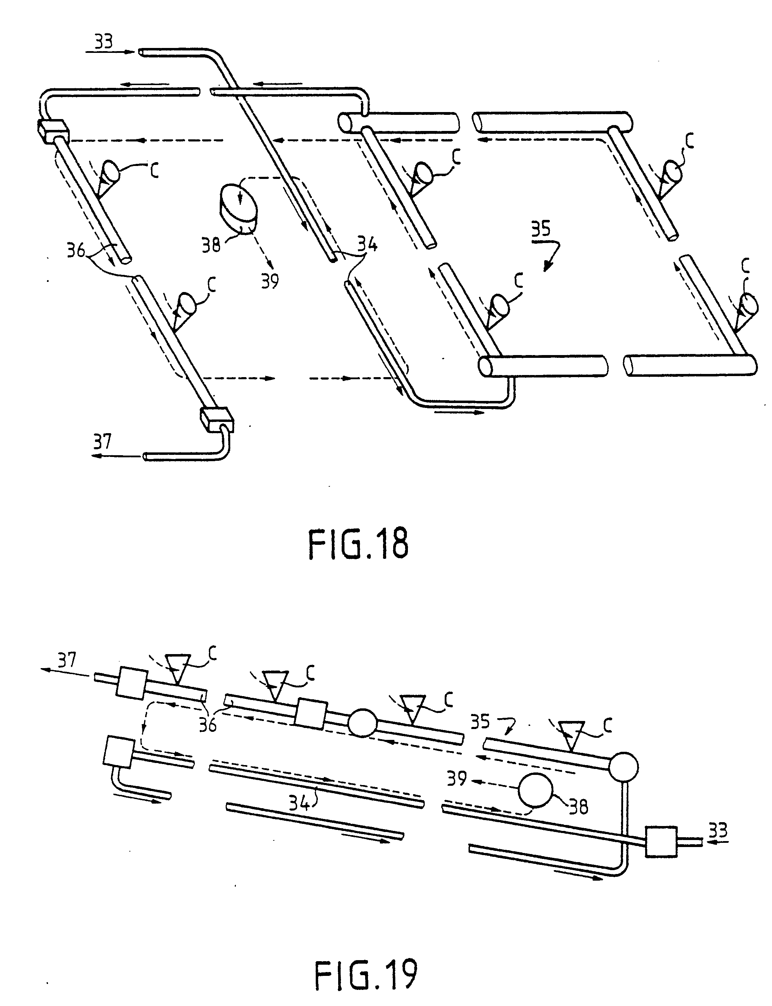

On se référera maintenant aux figures 3 et 4 illustrant un insolateur comportant des concentrateurs selon l'invention pour en montrer le fonctionnement. Des concentrateurs tels que décrits ci-dessus, y ont été schématisés et désignés par la référence générale C. La particularité d'un tel insolateur « I » (avec sa couverture transparente T et ses parois isolantes et absorbantes $I_p$) est d'avoir un espace intermédiaire ($E_i$) très important où sont distribués les pré-foyers (C), aussi voisins que possible, de manière que la captation du rayonnement direct (R) soit aussi élevée que faire se peut, les précautions étant prises toutefois pour que les mouvements d'orientation de ces pré-foyers, qui ne font d'ailleurs que se mouvoir parallèlement entre eux, ne soient point gênés. Le volume qui reçoit le rayonnement non capté par les concentrateurs est appelé foyer secondaire. La conversion du rayonnement en chaleur se produit comme dans tout insolateur à fonction thermique sur les différentes surfaces qui reçoivent le rayonnement et qui doivent être traitées pour être absorbantes et si possible peu émissives dans l'infrarouge. Toutefois, dans le cas de l'invention, il y a intérêt à véhiculer cette chaleur au moyen d'air ou d'un autre gaz mis en circulation dans ce foyer secondaire et admis par tout moyen approprié (non représenté) ; cet air ou ce gaz peut en effet s'échauffer à une température plus élevée que celle habituelle des insolateurs classiques en raison d'un mode particulier de réception du rayonnement solaire et de conversion en chaleur. Cet air ou ce gaz qui s'échauffe d'ailleurs un peu au contact des diverses parois qui se trouvent dans le foyer secondaire : surfaces extérieures du pré-foyer, des montures, du foyer principal, des canalisations, etc., est introduit en effet par aspiration dans une structure alvéolaire A (cf. figures 15 à 17 ou 26 désigne une couverture transparente ; 27 désigne des renforçateurs intérieurs à miroirs plans ; 28 désigne des alvéoles absorbants et anti-émissifs pour le transfert de la chaleur à l'air en circulation ; 29 désigne l'arrivée d'air du foyer secondaire de l'insolateur ; 30 désigne la gaine d'amenée de l'air ou d'un gaz chaud, la sortie de cette gaine s'accroissant dans le sens de la circulation de l'air ; 31 désigne l'isolation thermique) dont les canaux 32 légèrement courbés (cf. figure 17) reçoivent le rayonnement solaire global qui traverse la couverture transparente de l'insolateur et en partie réfléchi par des renforçateurs plans selon FR-A-2 303 251.

Les parois de ces canaux sont absorbantes dans toutes l'étendue du spectre solaire (visible et invisible) ; elles s'échauffent donc et transfèrent la chaleur à l'air ou au gaz qui circule le long des parois, circulation rendue turbulente au moyen d'aspérités diverses réservées sur lesdites parois lesquelles sont constituées d'un matériau très mince et très isolant : verre réfractaire « Bakélite, etc ». Ces alvéoles fonctionnent du point de vue de l'émission du rayonnement infrarouge, à la répartition près des températures le long des parois, un peu comme des structures cellulaires de Francia. La circulation du fluide gazeux se faisant dans le sens de la propagation de la lumière, il n'y a pratiquement pas de pertes par convection, et les pertes par émission d'infrarouge sont faibles. Les performances d'un tel type d'insolateur, de fabrication relativement simple, ne peuvent qu'être excellentes, ce qui permet d'envisager l'obtention de températures dites moyennes. Les aspérités, mentionnées précédemment, peuvent être tout simplement constituées de languettes découpées dans les parois elles-mêmes des canaux, ce qui permet de créer des courts-circuits qu'utilisent les filets d'air pour se répartir plus également dans les divers canaux.

Le même système alvéolaire peut être utilisé dans le concentrateur, soit à la sortie du pré-foyer, dans l'ouverture focale, soit dans le foyer thermique, soit simultanément à la sortie du pré-foyer et dans le foyer thermique. Les pertes par l'ouverture focale sont alors réduites notablement.

Le but final de l'invention étant de réaliser une production solaire industrielle d'énergie, il importe d'obtenir des températures suffisamment élevées pour envisager une conversion thermodynamique et, partant, une production d'énergie électrique dans les conditions économiques les meilleurs possibles. Il y a donc lieu d'examiner plus précisément le cas d'une production de vapeur d'eau à haute pression et à haute température.

L'insolateur à concentrateurs peut être considéré comme formé de tranches méridiennes, ou de tranches Est-Ouest, juxtaposées fournissant de la vapeur aux caractéristiques imposées, de l'air ou un gaz chaud à haute température, enfin de l'air ou un gaz chaud ou du liquide à moyenne et faible température. L'ensemble des tranches juxtaposées forme une unité thermique ou chaudière à vapeur dont les dimensions ne peuvent être fixées que par des considérations économiques.

L'eau d'alimentation de ces chaudières doit être préchauffée ; l'unité thermique doit donc comporter, dans l'espace laissé libre à l'intérieur de l'insolateur, l'équivalent d'un économiseur dont les tubes, parcourus par l'eau d'alimentation, sont chauffés par l'air ou le gaz chaud véhiculant une partie du flux thermique principal qui est l'équivalent des fumées dans les chaudières à combustible. S'il y a d'autres flux thermiques, ils peuvent servir à alimenter les industries qui peuvent s'installer sur le sol sous l'insolateur. Les figures 18 et 19 donnent quelques schémas d'installations possibles. Ainsi, la figure 18 est un schéma illustrant le cas des concentrateurs C alignés selon la méridienne inclinée de la latitude alors que la figure 19 illustre le cas des concentrateurs alignés Est-Ouest avec légère pente. Sur ces dessins :

33 : désigne l'arrivée de l'eau d'alimentation ;
34 : désigne un économiseur ;
35 : désigne les circuits de vaporisation ;
36 : désigne les circuits de surchauffe ;
37 : désigne la sortie de la vapeur haute pression et haute température ;
38 : désigne un ventilateur et
39 : désigne le retour de l'air dans l'insolateur.

Une station thermique que l'invention permet d'envisager comporte en outre tous les accessoires des dispositifs nécessaires à l'alimentation en vapeur de la centrale thermique qui doit fournir en particulier de l'énergie électrique : collecteurs de transport de la chaleur, ballons séparateurs, purgeurs automatiques, soupapes de sûreté, tuyauteries diverses, d'alimentation, de vidange, d'extraction, appareil de production d'eau d'appoint et de traitement de cette eau, pompes, ventilateurs, etc., tout ceci étant du domaine de l'homme de l'art et n'étant point spécifique à l'énergie solaire. En ce qui concerne les installations spécifiques à l'énergie solaire, la variabilité aléatoire du rayonnement incident exige qu'il soit prévu des dispositifs de régularisation afin d'adapter l'énergie produite à la consommation à satisfaire.

Par ailleurs, il y a lieu de récupérer toutes les pertes d'énergie, généralement à faible température, mais qui peuvent être revalorisées en température, mais qui peuvent être revalorisées en température au moyen justement des insolateurs à air faisant l'objet de l'invention. Cette revalorisation peut se faire soit à moyenne température au moyen de l'insolateur à air à haute performance précédemment décrit, soit à température plus élevée au moyen justement des concentrateurs. Les échangeurs nécessaires peuvent être logés dans l'espace intermédiaire afin de réduire les pertes thermique. Les chaleurs qui peuvent être revalorisées immédiatement peuvent être stockées, provisoirement, généralement sous forme sensible, dans l'attente d'un ensoleillement favorable. Les réservoirs de stockage sont tout naturellement placés sous l'insolateur.

La régularisation peut s'effectuer, certes, comme il est habituel actuellement, par accumulation de chaleur. Cependant, la possibilité de récupération des pertes thermiques ouvre la voie à de multiples applications où une source thermique est nécessaire.

Les applications de l'invention couvrent donc toutes les applications du chauffage des fluides.

Il est à remarquer que tout ce qui vient d'être dit est applicable au cas où la surface réfléchissante au lieu d'être paraboloïde de révolution est cylindro-parabolique, les figures en coupe étant exactement

**0 083 548**

applicables à l'un ou l'autre cas.

Le concentrateur cylindroparabolique multiple présente l'avantage d'une plus grande captation d'énergie pour le même largeur de la fenêtre première ; elle peut avoir l'inconvénient d'une plus grande déperdition par rayonnement infrarouge traversant la fenêtre seconde dont la surface, toujours pour la même largeur de la fenêtre première, est un peu plus grande, mais ces déperditions sont récupérées par le pré-foyer qui constitue une caractéristique fondamentale de l'invention.

En particulier, il peut être précisé les points suivants :

— La couverture transparente est en principe fixe, cependant si l'on désire éviter l'ombre portée du cadre soutenant la plaque transparente sur le concentrateur, cette couverture peut être rendue mobile. La plaque transparente est généralement rectangulaire, le déplacement peut alors être réduit à une simple translation selon le petit axe du rectangle.

— La couverture transparente est généralement plane, mais elle peut adopter une forme cylindrique : cylindre à axe vertical ou non, et plus généralement une forme absolument quelconque.

Dans le cas où les concentrateurs ne peuvent recevoir tous simultanément les rayons directs, ces rayons peuvent leurs parvenir par réflexion sur des héliostats extérieurs. L'utilisation de tels héliostats peut même être envisagée dans le cas de la couverture plane, choisie alors, de préférence, verticale.

— La fenêtre d'entrée du rayonnement incident pour le concentrateur, n'est pas nécessairement une surface plane et de forme circulaire. En particulier, s'il s'agit de :

lentille de Fresnel, cette fenêtre peut avoir une forme quelconque en particulier polygonale ; elle peut être plane ou former une sorte de dôme sur le pré-foyer ;

multiparaboloïde, cette fenêtre peut être une portion de sphère afin d'éviter l'extension en diamètre de la tâche image sur le plan focal.

La section du système optique par un plan perpendiculaire à l'axe optique peut être absolument quelconque. Dans le cas de la surface réfléchissante, cette surface peut être formée d'éléments étroits de paraboloïde de révolution ayant même axe optique et même point focal, placés les uns contre les autres afin de pouvoir capter davantage de rayonnement que ne le permet la forme circulaire habituelle. Cette section peut être polygonale et plus particulièrement hexagonale. Plus généralement cette surface, dont les sections par des plans perpendiculaires à l'axe optique sont, à priori, quelconques, peut être formée, à la limite, de génératrices paraboliques ayant ou non le même point focal sur le même axe ou un axe parallèle. Les points focaux correspondant à chaque génératrice peuvent en effet être distribués de n'importe quelle façon sur le plan d'entrée du rayonnement à l'intérieur du foyer thermique. Cette répartition des points focaux peut être choisie de manière en particulier à homogénéiser l'éclairement sur le plan d'entrée ou sur les surfaces réceptrices placées à l'intérieur du foyer thermique lui-même.

Dans le premier cas, le dispositif est particulièrement intéressant pour le renforcement de l'éclairement énergétique sur les piles photovoltaïques. Dans le second cas, il est possible d'homogénéiser plus facilement les températures à l'intérieur du foyer thermique.

La section de la fenêtre d'entrée du rayonnement dans le foyer thermique ne constitue pas un facteur primordial car la quasi suppression des pertes par cette ouverture, du fait de l'aspiration de l'air qui récupère, lors de son passage dans le pré-foyer, la plus grande partie de l'énergie réémise, laquelle se transforme en chaleur justement dans le pré-foyer, rend cette condition de petitesse de la fenêtre moins importante.

— La partie arrière de l'insolateur formant isolation thermique, peut être, par endroits, transparente afin d'éclairer, s'il en est besoin, le sol ou les locaux placés au-dessous. Cette partie arrière, toujours isolée thermiquement, peut être constituée de lames transparentes parallèles emprisonnant des lames d'air, ou encore par des structures alvéolaires du type Francia à nid d'abeilles en matière plastique transparente ou en film plastique souple plissé et pendant naturellement.

La lumière qui traverse ainsi l'ensemble de captation, soit directement, soit au moyen de guides lumière, peut servir également à des applications agronomiques.

— On peut disposer dans l'espace intermédiaire compris entre la couverture transparente et le fond arrière, outre les convertisseurs photothermiques précédemment indiqués, des convertisseurs photoélectriques ou photochimiques, dans les endroits les plus favorables. Les piles photoélectriques étant en général fort peu épaisses, leur installation en est facilitée. L'énergie électrique ainsi obtenue directement, peut assurer l'autonomie énergétique de l'installation ou tout au moins des dispositifs de contrôle et de sécurité.


## Revendications

1. Dispositif pour capter et exploiter au maximum le rayonnement solaire, dispositif du type comportant un ou plusieurs moyens optiques (C), conçus pour capter dans une enceinte (2), montée orientable, les rayons lumineux directs quasiment parallèles provenant du soleil et les faire converger en un point focal (F), ce dernier se situant dans l'ouverture (4) de diamètre aussi faible que possible d'une enceinte fixe (3) thermique isolée contenant des surfaces fixes d'échanges thermiques avec des canalisations fixes de circulation (6) d'un fluide caloporteur, caractérisé par le fait qu'il renferme dans l'espace intermédiaire (Ei) entre une couverture transparente (T) et des parois (Ip) de l'insolateur (I) :

a) les moyens optiques (C) thermiquement isolés avec les enceintes thermiquement isolées (2) et les surfaces fixes d'échange thermique contenues dans l'enceinte fixe qui sont en communication avec des moyens d'admission (2A, 5) d'air ou d'un autre gaz et de circulation de ce dernier autour desdites canalisations fixes de circulation (6) dudit fluide caloporteur ;

b) des surfaces réceptrices absorbantes (A) destinées à recevoir le rayonnement solaire non précédemment capté par lesdits moyens optiques (C) et des moyens de circulation (29, 30) d'air ou d'un autre gaz autour des surfaces réceptrices (A).

2. Dispositif capteur du rayonnement solaire global selon la revendication 1, caractérisé par le fait que l'axe de rotation servant au mouvement d'orientation dudit moyen optique se situe sensiblement audit point focal (F).

3. Dispositif capteur du rayonnement solaire global selon la revendication 1 ou 2, caractérisé par le fait que ledit moyen optique faisant converger les rayons lumineux directs quasiment parallèles provenant du soleil vers le point focal (F) est choisi parmi les dispositifs optiques du type catoptrique ou dioptrique permettant au faisceau de rayons réfléchis de se propager dans le sens général de la lumière incidente.

4. Dispositif capteur du rayonnement solaire global selon l'une des revendications 1 à 3 caractérisé par le fait que ledit moyen optique comporte une lentille de Fresnel (1) de forme et de section quelconque et/ou des surfaces réfléchissantes de révolution ou non, dont le facteur de réflexion est surtout élevé dans la partie visible et faible dans le spectre infra-rouge en association avec une couverture transparente placée à l'entrée du rayonnement solaire ; dans le cas d'une lentille de Fresnel (1), cette couverture est constituée par cette lentille elle-même.

5. Dispositif capteur du rayonnement solaire global selon l'une des revendications 1 à 3 caractérisé par le fait que ledit moyen optique est constitué d'un multi-paraboloïde de révolution grand angulaire ou par une surface réfléchissante formée de plusieurs paraboloïdes de révolution de grand angulaire placés à l'intérieur les uns des autres, ces paraboloïdes pouvant être échancrés suivant un angle pouvant atteindre 180°.

6. Dispositif capteur du rayonnement solaire global selon l'une des revendications 1 à 3, caractérisé par le fait que ledit moyen optique est constitué d'éléments cylindroparaboliques à multi-surfaces grand angulaire.

7. Dispositif capteur du rayonnement solaire global selon l'une des revendications 1 à 6, caractérisé par le fait qu'il comporte en outre des moyens optiques supplémentaires (8) dits surconcentrateur qui sont placés au voisinage de l'ouverture (4) située audit point focal de manière à embrasser la totalité des rayons convergents éventuellement aberrants pour les diriger sûrement vers ladite couverture focale afin qu'ils puissent pénétrer dans ledit foyer thermique.

8. Dispositif capteur du rayonnement solaire global selon l'une des revendications 1 à 6, caractérisé par le fait qu'il comporte en outre des surfaces réceptrices absorbantes alvéolaires supplémentaires prévues soit à la sortie dudit moyen optique (C), dans son ouverture focale (4) soit dans ledit foyer thermique (3) soit à l'un et à l'autre endroit pour réduire les pertes par réémission au travers de ladite ouverture focale.

9. Dispositif capteur du rayonnement solaire global selon l'une des revendications 1 à 8, caractérisé par le fait qu'il comporte, dans ledit espace intermédiaire (Ei) hors des moyens optiques de focalisation (C), des surfaces réceptrices constituées par une structure alvéolaire (A) très absorbante dans le visible et l'infra-rouge pour former des canaux (32) parcourus dans le sens des rayons lumineux par une circulation d'air animée d'un mouvement turbulent.

10. Dispositif capteur du rayonnement solaire global selon l'une des revendications 1 à 9, caractérisé par le fait que le ou les moyens optiques (C) comporte un dispositif occulteur placé sur le trajet du rayonnement soit en amont soit à la sortie de ces moyens.

11. Dispositif capteur du rayonnement solaire global selon l'une des revendications 1 à 10, caractérisé par le fait que la couverture transparente (T), de l'ensemble d'insolateur peut avoir un mouvement de translation.

12. Dispositif capteur du rayonnement solaire global selon l'une des revendications 1 à 11, caractérisé par le fait que ladite couverture transparente (T), peut être plane ou de forme quelconque et que des héliostats extérieurs sont prévus lorsque les moyens optiques (C) d'une installation mettant en œuvre plusieurs de ces dispositifs ne reçoivent pas simultanément le rayonnement direct.

13. Dispositif capteur du rayonnement solaire global selon l'une des revendications 1 à 12, caractérisé par le fait que la partie arrière (Ip) de l'insolateur (I) formant isolation thermique est, par endroits, transparente afin d'éclairer, s'il en est besoin, le sol ou les locaux placés au-dessous.

14. Dispositif capteur du rayonnement solaire global selon l'une des revendications 1 à 13, caractérisé par le fait qu'il comporte dans ledit espace intermédiaire (Ei) un ou plusieurs desdits moyens optiques (C) disposés en une ou plusieurs lignes dans les deux directions de l'espace à savoir Est-Ouest ou Nord-Sud.

**Claims**

1. A device for collecting and maximally utilizing solar radiation, said device being of the type comprising one or several optical means (C) adapted to collect into an enclosure (2), orientatably mounted, the almost parallel direct light radiations coming from the sun and to converge them towards a focal point (F) located through the opening (4) of cross-section as small as possible of a fixed thermally enclosure (3) containing fixed thermal exchange surfaces with fixed pipes (6) for circulating a heat transfer fluid, characterized by the fact that it comprises in the intermédiate space (Ei) between a transparent covering (T) and walls (Ip) of an insulator (I) :

a) the thermally insulated optical means (C) with the thermally insulated enclosures (2) and the fixed heat exchange surfaces located in the fixed enclosure which are related with means (2A, 5) for admitting air or another gas and circulating the same around said fixed pipes (6) for circulation of said heat transfer fluid ;

b) absorbent receiving surfaces (A) adapted to receive the solar radiation not previously collected by said optical means (C) and air or other gas circulating means (29, 30) around said receiving surfaces (A).

2. A device for collecting the total solar radiation according to claim 1, characterized by the fact that the rotational axes serving for the orientation motions of said optical means is substantially placed at said focal point (F).

3. A device for collecting the total solar radiation according to claim 1 or 2, characterized by the fact that said optical means converging the almost parallel direct light radiations coming from the sun to the focal point (F) is selected from optical devices of the catoptric or dioptric type permitting propagation of a beam of reflected radiations in the general direction of incident light.

4. A device for collecting the total solar radiation according to any one of claims 1 to 3, characterized by the fact that said optical means comprises a Fresnel lens (1) having any shape or cross-section and/or reflective surfaces of revolution or not, the reflective factor of which is especially high in the visible range and low in the infra-red spectrum in association with a transparent covering located at the solar radiation inlet ; in case of Fresnel lens (1) said lens it-self constitutes such covering.

5. A device for collecting the total solar radiation according to any one of claims 1 to 3, characterized by the fact that said optical means consists of a wide-angled multiparaboloid of revolution or a reflective surface formed of several wide-angled paraboloids of revolution located inside one another, such paraboloids being indentable over an angle that may reach 180°.

6. A device for collecting the total solar radiation according to any one of claims 1 to 3, characterized by the fact that said optical means consists of wide-angled multisurface cylindro-parabolic elements.

7. A device for collecting the total solar radiation according to any one of claims 1 to 6, characterized by the fact that it further comprises supplementary optical means (8) called « super-concentrators » which are located in the neighborhood of the opening (4) situated at said focal point, such as to embrace all of the convergent but possibly aberrent radiations to direct them efficiently towards the focal opening so that they can penetrate into said thermal focus.

8. A device for collecting the total solar radiation according to any one of claims 1 to 6, characterized by the fact that it further comprises supplementary alveolar absorbent receiving surfaces provided either at the outlet from said optical means (C), in its focal opening (4) or in said thermal focus (3) or at either location so as to reduce the losses by re-emission through said focal opening.

9. A device for collecting the total solar radiation according to any one of claims 1 to 8, characterized by the fact that it comprises, into said intermediate space (Ei) apart from focusing optical means (C) receiving surfaces consisting of alveolae structure (A) very absorbent, in the visible and infra-red ranges to form channels (32) travelled in the direction of the radiations by circulating air having a turbulent motion.

10. A device for collecting the total solar radiation according to any one of claims 1 to 9, characterized by the fact that one or more of said optical means (C) comprise(s) a safety shieling disposed in the optical path either in up-stream location or downstream with respect to said means.

11. A device for collecting the total solar radiation according to any one of claims 1 to 10, characterized by the fact that the transparent covering (T) of the insolator assembly may have a translational motion.

12. A device for collecting the total solar radiation according to any one of claims 1 to 11, characterized by the fact that said transparent covering (T) may be planar or of different shapes and in that outer heliostats are provided when the optical means (C) of the installation using several of said devices do not simultaneously receive the direct radiations.

13. A device for collecting the total solar radiation according to any of claims 1 to 12, characterized by the fact that the rear portion (Ip) of the insolator (I) which forms thermal insulating is, locally, transparent to illuminate, if needed, the ground or the premises disposed underneath.

14. A device for collecting the total solar radiation according to any one of claims 1 to 13, characterized by the fact that it comprises in said intermediary space (Ei) one or more of said optical means (C) disposed in one or more lines in both directions in space along East-West or North-South lines.

**Patentansprüche**

11

1. Vorrichtung zum Sammeln und maximalen Verwerten der Sonnenstrahlung, des Typs, der ein oder mehrere optische Mittel (C) aufweist, die zum Einfangen der direkt quasi-parallel einfallenden, von der Sonne stammenden Lichtstrahlen in einem ausrichtbar angebrachten Gehäuse (2) ausgelegt sind und sie in einem Brennpunkt zusammenlaufen lassen, wobei dieser sich in einer Öffnung (4) mit geringstmöglichem Durchmesser in einem festen, thermisch isolierten Gehäuse (3) befindet, das feste Wärmetauschflächen mit festen Umlaufleitungen (6) für ein Wärmeträger-Fluid enthält, dadurch gekennzeichnet, daß die Vorrichtung in dem Zwischenraum (Ei) zwischen einem transparenten Deckel (T) und den Wänden (Ip) des Isolators (I) enthält :

a) die thermisch isolierten optischen Mittel (C) mit den thermisch isolierten Gehäusen (2) und den festen Wärmetauschflächen, die sich in dem festen Gehäuse befinden und in Verbindung mit Mitteln zum Einlassen (2A, 5) von Luft oder einem anderen Gas und zur Zirkulation desselben um diese festen Umlaufleitungen (6) des Wärmeträger-Fluides stehen ;

b) absorbierende Aufnahmeflächen (A), bestimmt zur Aufnahme der nicht vorher durch die optischen Mittel (C) und die Zirkulationsmittel (29, 30) für Luft oder ein anderes Gas um die Aufnahmeflächen (A) eingefangenen Sonnenstrahlung.

2. Einfangvorrichtung für die gesamte Sonnenstrahlung nach Anspruch 1, dadurch gekennzeichnet, daß die der Ausrichtbewegung des optischen Mittels dienende Rotationsachse im wesentlichen an dem Brennpunkt gelegen ist.

3. Einfangvorrichtung für die gesamte Sonnenstrahlung nach Anspruch 1 oder 2, dadurch gekennzeichnet, daß das optische Mittel, das die quasiparallel gerichteten, von der Sonne stammenden Lichtstrahlen an dem Brennpunkt (F) zusammenlaufen läßt, aus den optischen Einrichtungen des Reflexions- oder des Brechungs-Typs ausgewählt ist, die einem reflektierten Strahlenbündel erlauben, sich in Hauptrichtung des auffallenden Lichtes fortzupflanzen.

4. Einfangvorrichtung für die gesamte Sonnenstrahlung nach einem der Ansprüche 1 bis 3, dadurch gekennzeichnet, daß das optische Mittel eine Fresnel-Linse (1) beliebiger Form und beliebigen Querschnittes umfaßt und/oder reflektierende Flächen, in Rotationsform oder nicht, deren Reflexionsfaktor insgesamt im sichtbaren Teil erhöht und im Infrarot-Spektrum niedrig ist, im Zusammenhang mit einem transparenten Deckel, der am Eintritt der Sonnenstrahlung angebracht ist ; im Falle einer Fresnel-Linse (1) ist der Deckel durch die Linse selbst gebildet.

5. Einfangvorrichtung für die gesamte Sonnenstrahlung nach einem der Ansprüche 1 bis 3, dadurch gekennzeichnet, daß das optische Mittel durch ein Mehrfach-Rotationsparaboloid großer Winkelöffnung gebildet ist oder durch eine durch mehrere ineinandergesetzte Rotationsparaboloide großer Winkelöffnung gebildete reflektierende Fläche, wobei die Paraboloide entsprechend einem Winkel ausgeschnitten sein können, der 180° erreichen kann.

6. Einfangvorrichtung für die gesamte Sonnenstrahlung nach einem der Ansprüche 1 bis 3, dadurch gekennzeichnet, daß das optische Mittel durch zylindrisch-parabolische Elemente mit Mehrfachflächen großer Winkelerstreckung gebildet ist.

7. Einfangvorrichtung für die gesamte Sonnenstrahlung nach einem der Ansprüche 1 bis 6, dadurch gekennzeichnet, daß es unter anderem optische Zusatzmittel (8), Überkonzentrateure genannt, enthält, die in Nachbarschaft zur an dem Brennpunkt gelegenen Öffnung (4) angeordnet sind, derart, daß sie die Gesamtheit der konvergierenden, eventuell abgelenkten Strahlen erfassen, um sie sicher durch die Brennöffnung zu lenken, bis sie in den thermischen Brennraum eindringen können.

8. Einfangvorrichtung für die gesamte Sonnenstrahlung nach einem der Ansprüche 1 bis 6, dadurch gekennzeichnet, daß sie unter anderen Aufnahmeflächen der absorbierenden Zusatzzellenart enthält, die entweder am Ausgang des optischen Mittels (C) in dessen Brennöffnung (4), oder in dem thermischen Brennraum (3), oder aber an dem einen und dem anderen Platz vorgesehen und dazu bestimmt sind, die Verluste durch Rückemission über die Brennöffnung zu vermindern.

9. Einfangvorrichtung für die gesamte Sonnenstrahlung nach einem der Ansprüche 1 bis 8, dadurch gekennzeichnet, daß sie in dem Zwischenraum (Ei) neben den optischen Fokalisierungsmitteln (C) Aufnahmeflächen besitzt, die durch eine Zellstruktur (A) gebildet sind, die im Sichtbaren und im Infraroten gut absorbieren, um Leitungen (32) zu bilden, die in der Richtung der Lichtstrahlen laufen für eine in turbulenter Bewegung angeregte Luftzirkulation.

10. Einfangvorrichtung für die gesamte Sonnenstrahlung nach einem der Ansprüche 1 bis 9, dadurch gekennzeichnet, daß das oder die optischen Mittel (C) eine Abdeckeinrichtung aufweisen, die am Eingang oder am Ausgang des Mittels über den Strahlungsweg angeordnet ist.

11. Einfangvorrichtung für die gesamte Sonnenstrahlung nach einem der Ansprüche 1 bis 10, dadurch gekennzeichnet, daß der transparente Deckel (T) der Isolationseinrichtung eine Verschiebebewegung durchführen kann.

12. Einfangvorrichtung für die gesamte Sonnenstrahlung nach einem der Ansprüche 1 bis 11, dadurch gekennzeichnet, daß der transparente Deckel (T) ebene oder beliebige Form besitzen kann und daß äußere Heliostaten vorgesehen sind, wenn die optischen Mittel (C) einer Installation mehrere Vorrichtungen in Betrieb setzen, die nicht gleichzeitig direkte Strahlung erhalten.

13. Einfangvorrichtung für die gesamte Sonnenstrahlung nach einem der Ansprüche 1 bis 12, dadurch gekennzeichnet, daß der hintere Teil (Ip) des Isolators (I), der die thermische Isolierung bildet, an Stellen durchsichtig ist, um, wo nötig, den Boden oder die darunter liegenden Stellen zu beleuchten.

14. Einfangvorrichtung für die gesamte Sonnenstrahlung nach einem der Ansprüche 1 bis 13, dadurch gekennzeichnet, daß sie in dem Zwischenraum (Ei) ein oder mehrere optische Mittel (C) aufweist, die in einer oder mehreren Reihen in den beiden Raumrichtungen wie Ost-West oder Nord-Süd verlaufen.

FIG.1

FIG. 2

FIG.3

FIG.4

0 083 548

FIG.5

4

**0 083 548**

FIG.6

FIG.7

FIG.8

FIG.9

FIG.10

FIG.11

FIG.12

FIG.13

FIG.14

FIG.15

26

29

29

27₂

27₂

30

28

31

31

A

28

A

FIG.16

FIG.17

32

FIG.18

FIG.19

FIG. 20